# EUROPEAN PATENT APPLICATION

(11) **EP 1 116 705 A1**
(43) Date of publication of application: **18.07.2001**
(21) Application number: 01300024.5
(22) Date of filing: 03.01.2001
(51) Int. Cl.: C04B 35/591, C04B 35/80, B32B 18/00

(54) **Fiber-strengthened silicon nitride sintered substance**

(30) Priority: 11.01.2000 JP 2000002457
(71) Applicant: ISUZU CERAMICS RESEARCH INSTITUTE CO., LTD., Fujisawa-shi, Kanagawa-ken (JP)
(72) Inventor: Hyuuga, Hideki, Kasugai-shi, Aichi-ken (JP); Oosumi, Kazuo, Fujisawa-shi, Kanagawa-ken (JP); Kita, Hideki, Fujisawa-shi, Kanagawa-ken (JP)
(74) Representative: Jenkins, Peter David

(57) **Abstract**

The fiber-strengthened silicon nitride sintered substance (10) comprises silicon nitride particles (2), an oxide or nitride grain boundary phase (4) containing silicon (3), a silicon nitride layer (5) and strengthened fibers (6). Contained in the oxide or nitride grain boundary phase (4) are a crystal phase (12) containing MnSiN₂, at least one element selected from the group consisting of aluminum (Al), yttrium (Y) and silicon (Si), and an amorphous phase (14) containing manganese (Mn), oxygen (O) and nitrogen (N).

While producing the fiber-strengthened silicon nitride sintered substance, it suppresses reaction of the strengthened fibre with oxygen, and suppresses the lowering of strength of the strengthened fiber caused by sintering.

## Description

The present invention relates to a ceramics which is excellent in toughness, particularly a fiber-strengthened silicon nitride sintered substance strengthened fibers such as carbon fibers in use for a cylinder liner, a piston or the like of the internal combustion engine.

For improving toughness of a silicon nitride sintered substance (ceramics), a fiber-strengthened silicon nitride sintered substance containing strengthened fibers such as silicon carbide fiber, carbon fiber or the like, and a silicon nitride sintered substance of which silicon nitride particle are grown in particle to a degree more than the normal one are utilized.

However, when a sintering temperature is risen in order to obtain a fine silicon nitride sintered substance, an oxide which is a gradient of a sintering assistant such as aluminum silicate (Al₆Si₂O₁₃), yttria (Y₂O₃), manganese oxide (MnO) or the like is volatilized so that strengthened fibers such as silicon carbide fiber, carbon fiber or the like are deteriorated, resulting in a difficulty of making the silicon nitride substance tougher. For sintering the silicon nitride sintered substance, since methods such as a hot press, HIP or the like are employed, it is difficult for this method to prepare products or parts having a complicated shape. When the particle growth of silicon nitride particles is promoted in order to improve the toughness, the strength of the silicon nitride sintered substance lowers.

In view of the aforementioned problem, it is an object of the present invention to provide a fiber-strengthened silicon nitride sintered substance which suppresses reaction of the strengthened fibre with oxygen, and suppresses the lowering of strength of the strengthened fiber caused by sintering.

For solving the aforementioned problem, the present invention provides a fiber-strengthened silicon nitride sintered substance in which strengthened fibers are dispersed in a silicon nitride layer comprising silicon nitride particles and an oxide or nitride grain boundary phase containing silicon, characterized in that a crystal phase containing MnSiN₂, at least one element selected from the group consisting of aluminum (Al), yttrium (Y) and silicon (Si), and an amorphous phase containing manganese (Mn), oxygen (O) and nitrogen (N) are contained in said oxide or nitride grain boundary layer.

According to the present invention, a fiber-strengthened silicon nitride sintered substance having high strength and high toughness is obtained by using Al₆Si₂O₁₃-Y₂O₃-Mno as a sintering assistant.

The Al₆Si₂O₁₃-Y₂O₃-MnO as a sintering assistant is low in a melting point, and low in de-oxygen properties. Accordingly, since α - β transition of silicon nitride particles of a mother phase occurs through a liquid phase at a low temperature by addition of the aforementioned sintering assistant, columnar particles of silicon nitride (Si₃N₄) grow.

A great cause that the strengthened fiber lowers when the silicon nitride sintered substance is sintered is the reaction of oxygen contained in the silicon nitride sintered substance with the strengthened fiber when sintering takes place. When the sintering assistant according to the present invention is used for the silicon nitride sintered substance, YₐSi_{b}O_{c}N_{d} is formed in the grain boundary phase which is contemplated to be a high temperature and to have an effect of taking in oxygen, and it is contemplated that the quantity of oxygen within the sintered substance which causes damage to the strengthened fiber reduces.

Further, when the silicon nitride sintered substance is sintered, a reducing silica (SiO₂) gas generated as a result of decomposition of Al₆Si₂O₁₃-Y₂O₃-Mno and mullite (3Al₂O₃ · 2SiO₂) suppresses deterioration of the strengthened fiber, and the volume expands with nitrification of silica (SiO₂). Accordingly, in the silicon nitride sintered substance which uses the aforementioned sintering assistant, even if the strengthened fiber is added, the strengthened fiber will no impede the sintering of the silicon nitride sintered substance, and the contraction rate caused by the sintering is small.

Embodiments of the present invention will now be described by way of example only, with reference to the accompanying drawings, in which:-
FIG. 1 is a sectional view schematically showing the texture or morphorogy of the fiber-strengthened silicon nitride sintered substance according to the present invention,
FIG. 2 is a side sectional view of the fiber-strengthened silicon nitride sintered substance,
FIG. 3 is a diagram showing the comparison of strength between the fiber-strengthened silicon nitride sintered substance and the conventional product,
FIG. 4 is a diagram showing the comparison of toughness between the fiber-strengthened silicon nitride sintered substance and the conventional product,
FIG. 5 is a diagram showing a relationship between the quantity of addition of manganese and strength of the fiber-strengthened silicon nitride sintered substance, and
FIG. 6 is a diagram showing a relationship between the quantity of addition of strengthened fibers and toughness of the fiber-strengthened silicon nitride sintered substance.

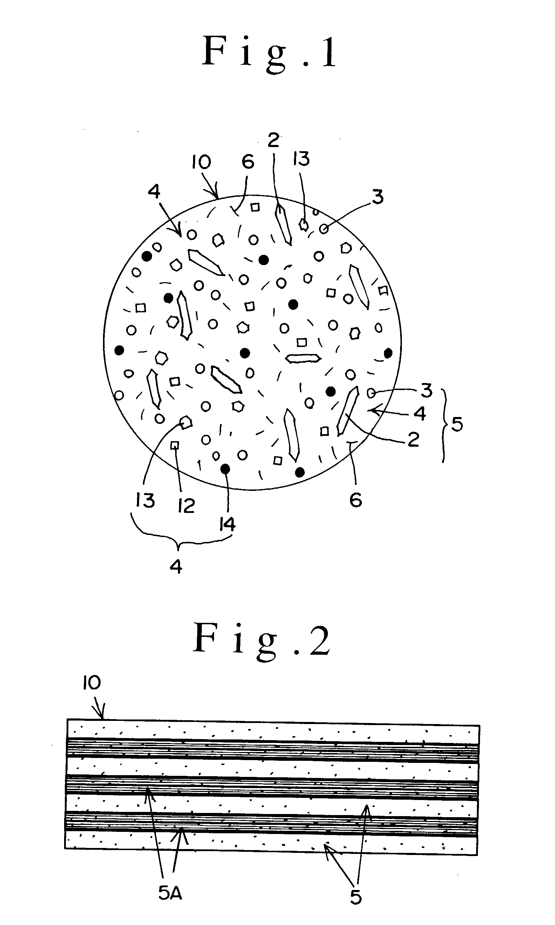

As shown in FIG. 1, in a fiber-strengthened silicon nitride sintered substance 10 according to a first example of the present invention, strengthened fibers 6 such as carbon fibers are dispersed in a silicon nitride layer 5 comprising silicon nitride (Si₃N₄) particles 2, silicon (Si) 3 and an oxide or nitride grain boundary phase 4. The oxide or nitride grain boundary phase 4 comprises a crystal phase 12 containing MnSiN₂, at least one element 13 selected from the group consisting of aluminum (Al), yttrium (Y) and silicon (Si), and an amorphous phase 14 containing manganese (Mn), oxygen (O) and nitrogen (N).

As shown in FIG. 2, in a fiber-strengthened silicon nitride sintered substance 10 according to a second example of the present invention, a silicon nitride layer 5 containing the strengthened fibers 6 and a silicon nitride layer 5A not containing the strengthened fibers 6 are alternately laminated. A quantity of addition of the strengthened fibers 6 into the fiber-strengthened silicon nitride sintered substance 10 is 5 to 45 wt.%. The gross quantity of said manganese (Mn) is 0.2 to 30 wt.% in terms of manganese oxide (MnO). Main ingredients of the strengthened fibers 6 are a compound (Si-N) of nitrogen and silicon and/or a compound (Si-C) of carbon and silicon. Length of the strengthened-fiber 6 is not less than 0.1 mm.

The fiber-strengthened silicon nitride sintered substance 10 is obtained by mixing powder comprising three elements, i.e., aluminum silicate (Al₆Si₂O₁₃), yttria (Y₂O₃) and manganese oxide (MnO) as a sintering assistant, which are measured at the predetermined rate; with mixed of silicon nitride powder and silicon powder or mixed powder of silicon nitride (Si₃N₄) and silicon (Si) as raw powder; adding carbon fibers as strengthened fibers; molding it into a required shape; thereafter reacting and calcining it at an atmosphere of nitrogen at a temperature of 1300 to 1400°C ; and finally sintering it at a temperature of 1600°C .

The contraction rate of the obtained fiber-strengthened silicon nitride sintered substance 10 was very small, 1%, but the porosity thereof was 3%. The fiber-strengthened silicon nitride sintered substance 10 comprises the silicon nitride particles 2 grown in pillar shape, the oxide or nitride grain boundary phase 4, the crystal phase 12 containing MnSiN₂, at least one element 13 selected from the group consisting of aluminum (Al), yttrium (Y) and silicon (Si), and the amorphous phase 14 containing manganese (Mn).

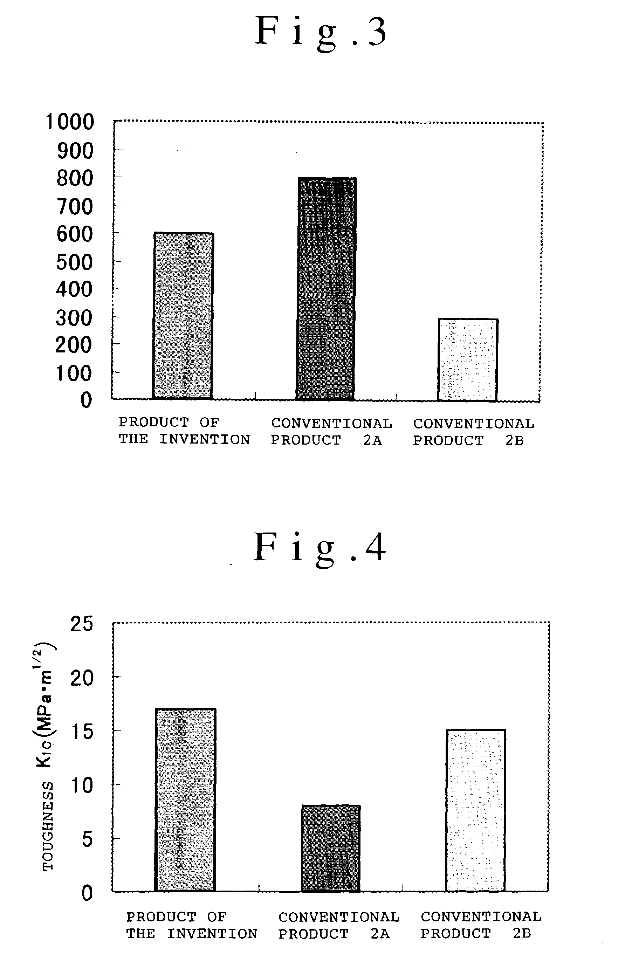

It was confirmed that the fiber-strengthened silicon nitride sintered substance 10 according to the present invention had the characteristics equal to or more than that of a conventional fiber-strengthened silicon nitride composite material 2A (which is sintered at a temperature of 1600°C using Al₂O₃ and Y₂O₃ as a sintering assistant) sintered by a hot press and a high toughness silicon nitride material 2B having the silicon nitride particles grown in pillar shape. The strength and the toughness of the fiber-strengthened silicon nitride sintered substance 10 according to the present invention and the conventional product are as shown in FIGS. 3 and 4.

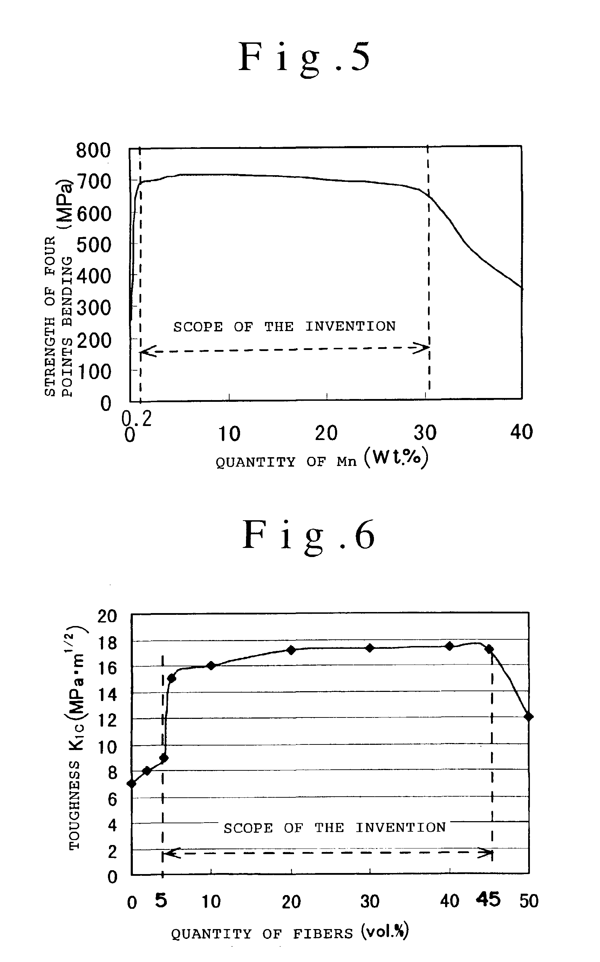

As shown in FIG. 5, the fiber-strengthened silicon nitride sintered substance 10 according to the present invention incarnates high strength in the case where the quantity of manganese (Mn) is 0.2 to 30 wt.% in terms of manganese oxide (MnO). When the quantity of addition of manganese (Mn) is smaller than the aforementioned value, a liquid phase is not produced at a sintering temperature, and so, sintering of silicon nitride is impeded. Conversely, when the quantity of addition of manganese (Mn) is larger than the aforementioned value, the viscosity of the liquid phase lowers so that the liquid phase flows outside, thus impairing the strength of the sintered substance.

As shown in FIG. 6, the toughness equal to that of the conventional product was obtained with 5 to 45 vol.% of the quantity of addition of the strengthened fibers. As shown in FIG. 2, when the silicon nitride layer 5 containing the strengthened fibers 6 and the silicon nitride layer 5A not containing the strengthened fibers 6 are alternately laminated, the fiber-strengthened silicon nitride sintered substance 10, which is higher in strength and toughness, is obtained.

It is noted that the fiber-strengthened silicon nitride sintered substance 10 according to the present invention obtained the similar effect even if silicon carbonate fibers or silicon nitride fibers are used as the strengthened fibers in place of the carbon fibers.

By the present invention silica (SiO) contained in the oxide or nitride grain boundary phase impedes the reaction of the strengthened fibers with oxygen (O), and the volume expands when silica (SiO₂) is nitrified. Accordingly, the lowering of the strength caused by the reaction of the strengthened fibers with oxygen (O) is suppressed, and the change in volume of the sintered substance is suppressed (the contraction rate is small).

The Al₆Si₂O₁₃-Y₂O₃-MnO as a sintering assistant assumes a liquid phase at a low temperature, and accelerates the growth of particles and fineness caused by the α - β transition of silicon nitride particles.

## Claims

1. A fiber-strengthened silicon nitride sintered substance in which strengthened fibers are dispersed in a silicon nitride layer comprising silicon nitride particles and an oxide or nitride grain boundary phase containing silicon, characterized in that a crystal phase containing MnSiN₂ in said grain boundary phase, at least one element selected from the group consisting of aluminum (Al), yttrium (Y) and silicon (Si), and an amorphous phase containing manganese (Mn), oxygen (O) and nitrogen (N) are contained in said oxide or nitride grain boundary layer.

2. The fiber-strengthened silicon nitride sintered substance according to claim 1, wherein said silicon nitride layer in which said strengthened fibers are dispersed and said silicon nitride layer in which said strengthened fibers are not dispersed are alternately laminated.

3. The fiber-strengthened silicon nitride sintered substance according to claims 1 and 2, wherein a quantity of said strengthened fibers is 5 to 45 vol.%.

4. The fiber-strengthened silicon nitride sintered substance according to claim 1, wherein the gross quantity of said manganese (Mn) is 0.2 to 30 wt.% in terms of manganese oxide (MnO).

5. The fiber-strengthened silicon nitride sintered substance according to claim 1, wherein main ingredients of the strengthened fibers dispersed in said fiber-strengthened silicon nitride sintered substance are a compound (Si-N) of nitrogen and silicon and a compound (Si-C) of carbon and silicon.

6. A fiber-strengthened silicon nitride ceramics composite substance according to claim 1, wherein length of said strengthened-fiber is not less than 0.1 mm.
